Europäisches Patentamt

European Patent Office

Office européen des brevets

(11) Publication number: **0 274 081**
**A2**

## EUROPEAN PATENT APPLICATION

(21) Application number: 87118333.1

(51) Int. Cl.⁴: **H01S 3/00** , B23K 26/00

(22) Date of filing: 10.12.87

(30) Priority: 12.12.86 US 941070

(43) Date of publication of application:
13.07.88 Bulletin 88/28

(84) Designated Contracting States:
DE FR GB SE

(71) Applicant: THE BOEING COMPANY
7755 East Marginal Way South
Seattle Washington 98124(US)

(72) Inventor: Lay, Henry P.
916 Sommerset Road Huntsville
Alabama 35803(US)

(74) Representative: Baillie, Iain Cameron et al
c/o Ladas & Parry Isartorplatz 5
D-8000 München 2(DE)

(54) **A flexible laser safety brush shroud.**

(57) A flexible laser safety brush shroud for providing protection from laser radiation while testing a unit under test whose output optics are capable of rotating while the laser is energized. The brush shroud allowing large and rapid rotation of the unit under test thereby avoiding physical damage to the laser tester or unit under test. By extension, any brush-like structure that is used to confine or exclude radiation of any wavelength, coherent or not, within or from a region of space, while allowing relative motion between a structure to which the brush is attached and another structure against which the brush is applied.

FIG-4

EP 0 274 081 A2

## A FLEXIBLE LASER SAFETY BRUSH SHROUD

Background of the Invention

This invention relates to a brush shroud and more particularly, but not by way of limitation, to a brush shroud used for protecting personnel and equipment when laser radiation is used with a laser tester and a unit under test.

In order to verify performance of military and commercial laser systems, the systems must be energized and their output beam directed into various measurement devices. Due to the physical nature of the laser and measurement devices and the test to be performed, it is always possible that stray reflections of laser radiation may be directed away from a straight line between the tester and the unit under test. These beams can contain sufficient energy to damage the human eye or other parts of the body or cause spurious reactions in or damage to surrounding equipment. Furthermore, many laser systems are configured with gimbal-mounted rotating output optics so the beam can be directed at will at an intended field of use. It is possible for a system to be inadvertently redirected away from the tester during a test so that the full laser beam, as opposed to a partial stray reflection, is pointed into a surrounding space. Therefore, it is necessary to protect surrounding personnel and equipment from such reflected or misdirected radiation.

Summary of the Invention

According to one aspect of the invention there is provided a flexible laser safety brush shroud, the shroud comprising: a plurality of bunches of bristles arranged in a row with one end of the bristles contained in a substrate, the substrate is part of a frame, the frame adapted for surrounding or bordering a path of laser radiation.

According to another aspect of the invention, there is provided a flexible laser safety brush shroud, the shroud used for protection of laser radiation from a laser tester and a unit under test, the brush shroud comprising: a plurality of tufts or bunches of bristles arranged in rows and contained in a substrate, the substrate part of a frame having various geometric configurations for surrounding or bordering a path of laser radiation transmitted between the laser tester and unit under test.

According to yet another aspect of the invention, there is provided a flexible brush shroud, the shroud used to block the path of coherent or incoherent radiation between two or more structures while allowing relative motion between them, the brush shroud comprising: a plurality of tufts or bunches of bristles of specific material appropriate to the wavelength and power density of the blocked radiation, arranged in rows and contained in a substrate, the substrate part of a frame having various geometric configurations for surrounding or bordering the path of radiation that is blocked.

Brief Description of the Drawings

Fig. 1 illustrates a perspective view of the brush shroud with a portion of the substrate cutaway to expose a partial view of the shroud's bristles.

Figs. 2A, 2B and 2C illustrate perspective views of a brush shroud for planar shaped, cylindrical shaped and spherical shaped safety shroud.

Figs. 3A and 3B illustrate an end sectional view and a side-sectional view of the basic brush shroud.

Fig. 4 illustrates a cut-away view of the brush shroud in use with a spherical shaped unit under test.

Detailed Description of the Drawings

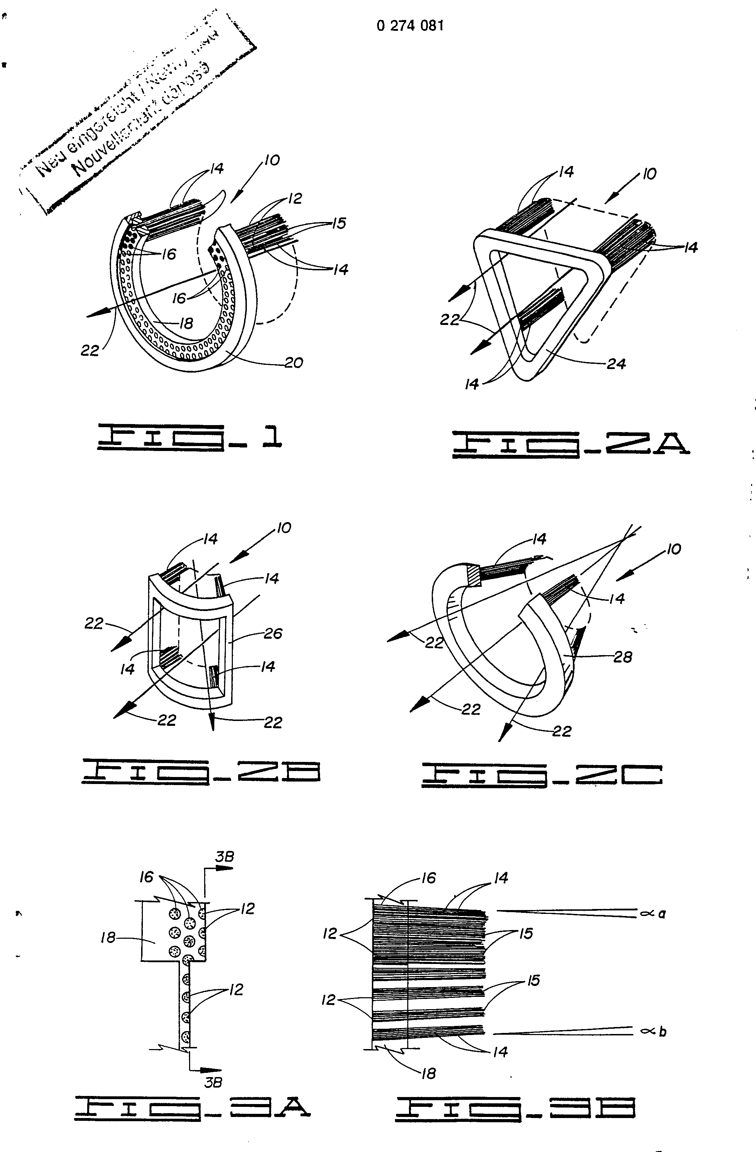

In Fig. 1 the flexible laser safety brush shroud is designated by general reference numeral 10 and may be constructed in various geometric configurations. The shroud includes tufts or bunches 12 of bristles 14 arranged in a plurality of rows 16 attached to and contained in a substrate 18 that is part of and within a frame 20 that surrounds or borders a path of laser radiation indicated by arrow 22. In this view, not all of the bristles 14 are shown in the drawing. Also, free ends 15 of the bristles 14 are shown untrimmed. The brush shroud 10 takes advantage of the fact that a large number of individual bristles 14 will make contact with the structure of a movable unit under test and with each other. Through the use of the combination of the bristles 14, laser energy is prevented from escaping yet the unit under test is allowed to rotate without causing physical damage. The laser energy that impinges upon the sides of any group of the bristles 14 will be reflected, diffracted and absorbed before it can reach the surrounding space.

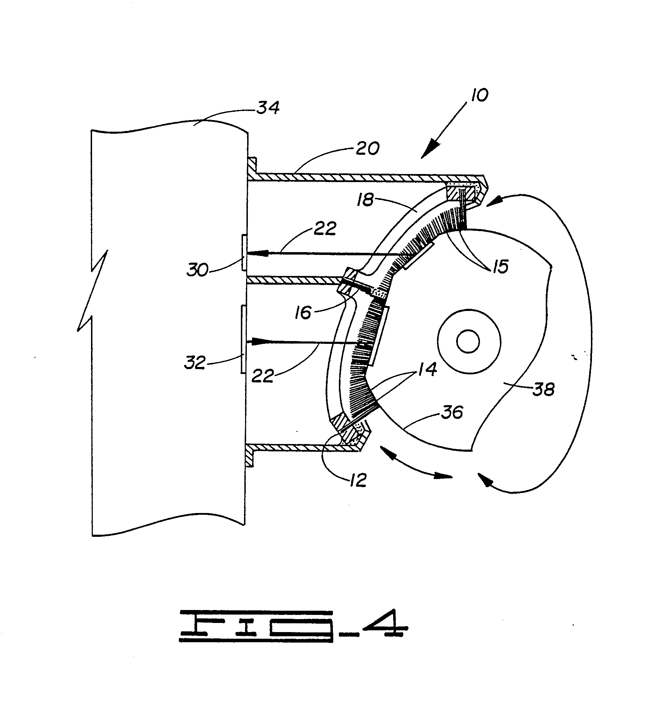

Figs. 2A, 2B and 2C show the brush shroud 10 made in a variety of shapes to accommodate various mating structures such as a frame 24 for planar shapes, a frame 26 for cylindrical shapes and a frame 28 for spherical shapes of various types of unit under test, particularly where the units under test have axes of radiation 22 that can translate or rotate. Not all of the bristles 14 are shown in these drawings. Additionally as shown in Fig. 3A and Fig. 3B (taken along line 3B-3B shown in Fig. 3A) any of these geometric shapes may contain more than one row 16 of bristles 14 around its periphery (or within, if it is desirable to separate light paths) with alternate or staggered rows 16 of tufts or bundles 12 being made to point at slightly different angles shown as αa or αb. These precautions will prevent unit under test motion from opening a gap in a bunch of the bristles 14 from which laser radiation might escape. Furthermore, all of the bristles' 14 free ends 15 can be trimmed during manufacture to accommodate surface features or irregularities in a particular unit under test structure.

Fig. 4 illustrates an example of the brush shroud 10 in use. Fixed ends of the bristle tufts 12 are attached in the substrate 18 which is bonded to the frame 20 and is disposed around apertures 30 and 32 of a tester 34 while the free ends 15 of the bristles 14 contact a surface 36 of a unit under test 38. The tester 34, in this example, includes a FLIR imager test aperture which is the aperture 32 in addition to the laser test aperture 30. Extra rows 16 of bristles 14 are shown separating the two different radiation paths 22. The optical part of the unit under test 38 is free to rotate without causing physical damage. In cases of very large angles of unit under test rotation, the test set-up can contain circuitry that detects unit under test motion and removes laser power before the unit under test laser output aperture leaves the volume of space surrounded by the brush shroud 10.

Materials used in the construction of the brush shroud 10 depend on the optical output characteristics of each particular unit under test. Bristles can range from normal animal or plastic fiber to special pigmented glass, carbon, metal or composite filaments. Each type of brush shroud 10 is designed to withstand a specific amount of direct laser power over a specific area of bristles for a specific time period.

The brush material used to construct a brush shroud 10 can be made on a flexible substrate 18 or "backbone" so that it can be bent to a desired shape of shroud or optical baffle and fastened temporarily or permanently to a support structure of framework 20 via the use of an adhesive, a rigid or flexible magnet, or mechanical fasteners. The bristle free ends 15 can then be trimmed as desired. Such a custom shroud is seen as a laboratory convenience and its optical integrity must be carefully verified. In contrast, the brush shrouds 10 used in testing military units under test must be manufactured under strict configuration control. They must be fitted or matched to a particular unit under test model and their testers configured accordingly to support the objective of completing complex tests with minimal requirements for highly skilled personnel.

As seen in the above-mentioned drawings, it is obvious, in addition to containing laser or light radiation within a given space, the brush shroud can be used also to keep ambient or stray radiation out of a volume or to keep it from interfering with sensitive tests or processes. As conceived, the brush shroud 10 is primarily useful for radiation from .01 to 1,000 micrometers, commonly called ultraviolet through visible to far infrared light. Also with an appropriate choice of materials it can be useful in blocking or dissipating radiation at other wavelengths as well.

Changes may be made in the construction and arrangement of the parts or elements of the embodiments as described herein without departing from the spirit or scope of the invention defined in the following claims.

## Claims

1. A flexible laser safety brush shroud, the shroud comprising: a plurality of bunches of bristles arranged in a row with one end of the bristles contained in a substrate, the substrate is part of a frame, the frame adapted for surrounding or bordering a path of laser radiation.

2. The shroud as claimed in Claim 1 wherein the bristles are arranged in a plurality of rows in the substrate.

3. The shroud as claimed in Claims 1 or 2 wherein free ends of the bristles are trimmed as desired for engagement around an optical part of a unit under test.

4. The shroud as claimed in Claims 1 to 3 wherein the frame is constructed in various geometric shapes having an opening for receiving the laser radiation therethrough.

5. A flexible laser safety brush shroud, the shroud used for protection of laser radiation from a laser tester and a unit under test, the brush shroud comprising: a plurality of tufts or bunches of bristles arranged in rows and contained in a substrate, the substrate part of a frame having various geometric configurations for surrounding or bordering a path of laser radiation transmitted between the laser tester and unit under test.

6. A flexible brush shroud, the shroud used to block the path of coherent or incoherent radiation between two or more structures while allowing relative motion between them, the brush shroud comprising: a plurality of tufts or bunches of bristles of specific material appropriate to the wavelength and power density of the blocked radiation, arranged in rows and contained in a substrate, the substrate part of a frame having various geometric configurations for surrounding or bordering the path of radiation that is blocked.

FIG_1

FIG_2A

FIG_2B

FIG_2C

FIG_3A

FIG_3B

FIG_4